# FASCICULE DE BREVET EUROPEEN

(11) **EP 1 854 651 B1**
(45) Date de publication et mention de la délivrance du brevet: **28.12.2011**
(21) Numéro de dépôt: 07290576.3
(22) Date de dépôt: 07.05.2007
(51) Int. Cl.: B60J 7/20, B60J 7/14

(54) **Procédé d'articulation d'un toit sur un véhicule convertible et véhicule correspondant**
Verfahren zum gelenkigen Anbringen eines Dachs auf einem Cabrio und entsprechendes Fahrzeug
Method of articulating a roof on a convertible vehicle and corresponding vehicle

(30) Priorité: 10.05.2006 FR 0604149
(43) Date de publication de la demande: 14.11.2007
(73) Titulaire: HEULIEZ SAS, 79140 Cerizay (FR)
(72) Inventeur: Queveau, Paul, 79140 Montravers (FR); Queveau, Gerard, 79140 Le Pin (FR); Guillez, Jean-Marc, 79140 Cirieres (FR)
(74) Mandataire: Novagraaf Technologies

(56) Documents cités:
- EP-A1- 1 092 579
- DE-A1- 4 316 485

## Description

L'invention concerne le domaine des véhicules découvrables dont les toits sont mobiles.

On connait des toits mobiles pour véhicules convertibles comprenant un élément de toit avant et un élément de toit arrière adaptés à recouvrir l'habitacle dans l'état fermé du toit.

Un problème ici posé concerne le stockage du toit dans un volume réservé du véhicule lorsqu'on l'a écarté du dessus de l'habitacle et/ou l'amélioration de l'accessibilité au coffre arrière, d'autant que c'est typiquement là ou dans une zone adjacente que l'on prévoit de ranger le toit, habitacle découvert.

Le document DE4316485, sur lequel sont basés les préambules des revendications 1 et 6, propose une solution à ce problème. La solution proposée est toutefois complexe et ne résout pas entièrement le problème de rangement du toit dans un volume réservé limité tout en assurant une bonne accessibilité du coffre. Les caractéristiques de la présente invention permettent notamment de libérer un volume supplémentaire dans le coffre ou l'espace pour un moteur arrière, grâce à un procédé selon la revendication 1 et un toit mobile selon la revendication 6.

Dans ce cadre il est ici proposé, afin d'au moins pallier tout ou partie de ces problèmes, de modifier l'écartement entre lesdits éléments avant et arrière de toit, en les éloignant l'un de l'autre au rangement du toit, de sorte qu'à l'état rangé l'élément de toit arrière se trouve déplacé longitudinalement le long de élément de toit avant, tandis qu'il s'en rapproche jusqu'à venir sensiblement contre, à la fermeture du toit.

Favorablement, on choisira de ranger le toit plié sensiblement à plat, en plaçant lesdits éléments de toit avec leurs faces intérieures concaves se faisant face globalement à plat dans leur espace de rangement réservé, en ayant articulé par rapport à la caisse du véhicule l'un au moins de ces éléments de toit et les ayant déplacés l'un par rapport à l'autre, favorablement par montage articulé de chacun sur lesdits moyens latéraux d'entrainement du toit, lors du retournement sensiblement à 180° de l'élément arrière, pour qu'à l'état rangé cet élément de toit arrière se trouve décalé longitudinalement en direction de l'avant du véhicule par rapport à l'autre élément.

Pendant le rangement du toit, on agira sur l'élément de toit arrière en le faisant se déplacer sur des moyens latéraux d'entrainement du toit entre ses états fermé et rangé et sur lesquels s'articule l'élément avant de toit.

Favorablement, les moyens d'écartement variable précités comprendront des moyens intermédiaires de liaison montés mobiles sur un châssis de toit, pour rendre l'élément arrière de toit mobile sur ce châssis, lequel comprendra alors lesdits moyens latéraux d'entrainement sur lesquels est monté articulé l'élément de toit avant.

La mobilité entre l'élément arrière de toit et ce châssis et/ou lesdits moyens latéraux d'entrainement favorisera le dégagement du toit au début de son mouvement d'ouverture.

La description non limitative ci-après est plus détaillée et se réfère à des illustrations où :
- la figure 1 montre, conformément à l'invention, un exemple de toit et de partie d'actionnement montés sur un véhicule convertible vu de côté,
- la figure 2 montre de coté le toit et une partie importante de son actionnement, avec, de gauche à droite : l'état fermé, un état intermédiaire de basculement et l'état ouvert, plié rangé, du toit,
- la figure 3 montre en perspective et en éclaté le toit avec des parties essentielles de son mécanisme de basculement,
- la figure 4 est la demi-vue, partie arrière droite, du véhicule dans suivant la flèche IV de la figure 1,
- la figure 5 est la coupe selon V-V de la figure 4.

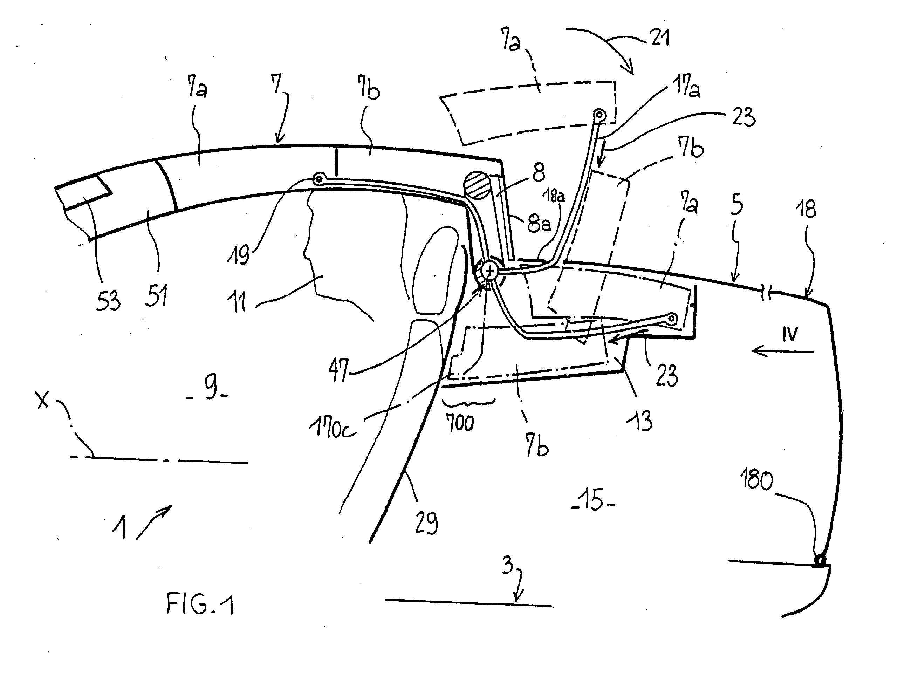

Comme montré figures 1 à 3 plus particulièrement, l'invention se rapporte donc à un véhicule convertible 1 comprenant une caisse 3 pourvue d'une carrosserie 5.

Un toit 7, ici à éléments de recouvrement rigides, est mobile entre une position fermée au-dessus de l'habitacle 9 et une position ouverte.

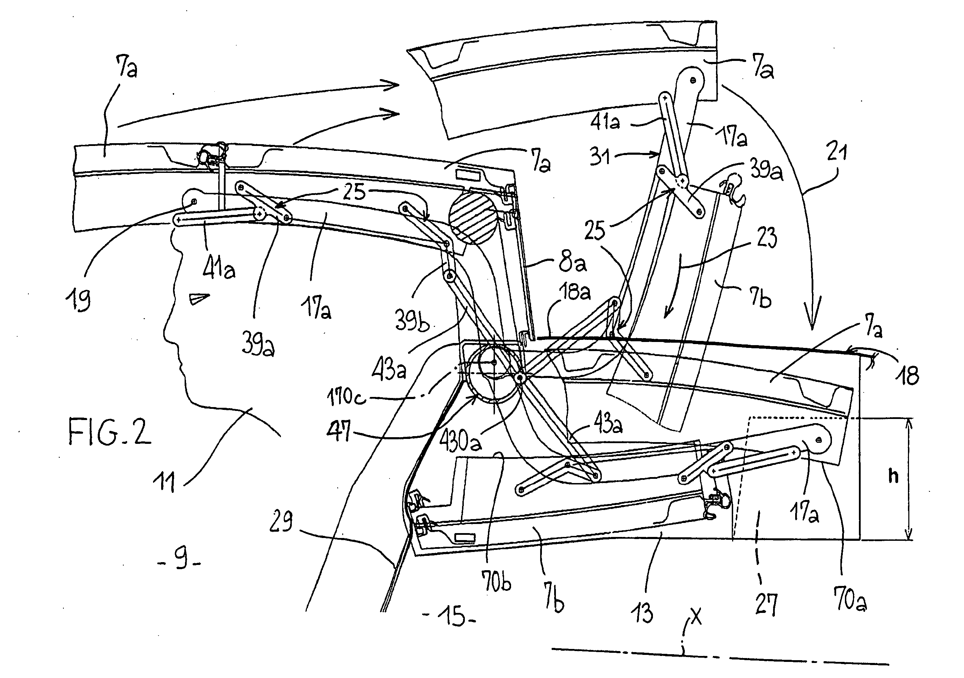

Figure 1, ce toit rigide 7 est, dans son état fermé, montré en traits pleins, à gauche comme sur la figure 2. Dans cette position, il est au-dessus de la tête de l'occupant 11 assis dans l'habitacle 9.

Dans son état ouvert, il est ici prévu que le toit 7 soit rangé derrière l'habitacle, dans l'espace de rangement 13 situé en haut et vers l'avant du coffre arrière 15 du véhicule. Le toit 7 est montré dans cet état en traits mixtes figure 1 et à droite, et en bas, figure 2.

Pour recouvrir entièrement l'habitacle, le toit 7 comprend ici uniquement deux éléments rigides de toit 7a, 7b, ci-après dénommés « éléments », situés l'un derrière l'autre suivant l'axe longitudinal X du véhicule, dans l'état fermé du toit. Il s'agit ici de deux panneaux galbés derrière lesquels on distingue, toit fermé, une structure transversale dressée 8, distincte du toit et portant la lunette arrière 8a qui peut alors être fixe sur la caisse 3. Chaque élément 7a,7b a ici une forme de panneau légèrement cintré, donc globalement plat.

La lunette pourrait être mobile par rapport à la caisse et le toit être différent, tel un toit où l'élément arrière, assimilable à 7b bien qu'en particulier de forme différente, intègrerait la lunette arrière qui pourrait donc bouger avec le toit, le cas échéant.

Comme on le voit figures 1 et 2, une particularité de l'invention prévoit donc qu'entre les états fermé et rangé du toit, on modifie l'écartement entre les éléments de toit avant 7a et arrière 7b, en les éloignant l'un de l'autre, au rangement du toit, de sorte qu'à l'état rangé (traits mixtes figure 1) l'élément 7b se trouve déplacé, ou décalé, longitudinalement le long de l'élément 7a, tandis qu'il s'en rapproche jusqu'à venir sensiblement contre lui (bord avant contre bord arrière, transversalement à X) à la fermeture du toit.

Ce décalage longitudinal va favoriser l'accessibilité au coffre 15, dès lors que l'élément arrière sera écarté de la zone d'ouverture de ce coffre, entraîné vers l'avant du véhicule de préférence.

A partir des figures 1 à 3, on comprend que le mouvement du toit 7 sur la caisse 3 est en particulier réalisé par l'intermédiaire de moyens latéraux d'entraînement principaux 17a, 17b qui définissent ici un châssis intermédiaire de toit (31; voir plus loin), grâce à quoi ce toit est porté par la caisse et s'articule par rapport à elle.

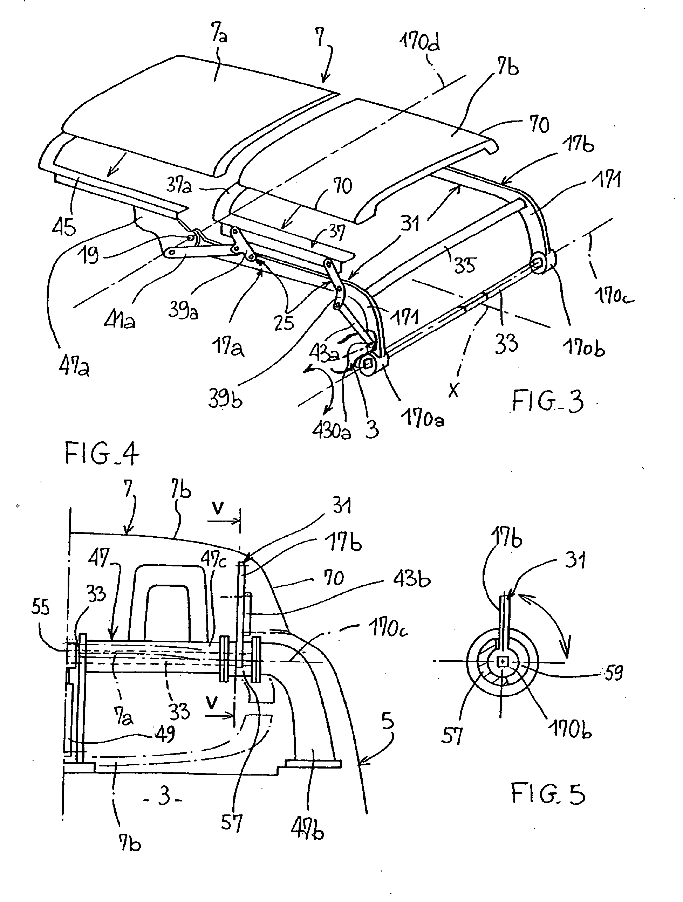

Favorablement, le châssis 31 est essentiellement latéral, s'étendant le long des bords latéraux 70 du toit, au moins de son élément arrière 7b, cf. figures 3 et 4, et de ceux de la caisse et/ou de la carrosserie ; cf. figure 4

L'élément 7a est d'ailleurs lui-même articulé en 19 (axe fixe) sur ces moyens latéraux d'entraînement et l'on constate figures 1 et 2 qu'au cours de la rétractation du toit, flèche 21, le décalage longitudinal en direction de l'avant du véhicule de l'élément 7b par rapport à l'élément avant s'obtient par un déplacement de cet élément 7b le long desdits moyens latéraux d'entraînement 17a, 17b (flèches 23 figs1 et 2).

Comme on le voit figures 2 et 3, ce décalage relatif entre les éléments 7a, 7b peut être obtenu en agissant, ici via le système de biellettes articulées 25, sur l'élément de toit arrière pour le faire à la fois s'éloigner de l'élément avant et pivoter par rapport à ce dernier et à la caisse 3, pendant le rangement du toit.

Le fait que ce déplacement longitudinal relatif entre les éléments 7a,7b conduise, dans l'exemple illustré, et donc à l'état rangé du toit, à un décalage longitudinal vers l'avant du véhicule (sensiblement suivant X) de l'élément arrière 7b par rapport à l'élément avant 7a, alors que les deux éléments 7a, 7b sont disposés sensiblement à plat, globalement l'un (7a) au-dessus de l'autre, doit permettre d'obtenir à la fois une hauteur h limitée de l'espace de rangement 13 et une libération d'un volume supplémentaire dans le coffre 15 ou de l'espace pour un moteur arrière, volume 27 délimité par des traits interrompus sur la figure 2.

Les moyens latéraux, 17a, 17b d'entraînement du toit comprennent ici des bras latéraux articulés sur la caisse 3, ou du moins autour d'un axe 170c fixe par rapport à elle, en 170a, 170b, dans l'environnement de leur extrémité arrière basse, près du bord avant 18a du capot 18, au niveau de la limite avant haute de l'espace 13; voir panneau avant 29 dressé de limitation du coffre et de cet espace, figures 1 et 2.

Dans l'exemple préféré illustré, les deux bras latéraux 17a, 17b apparaissent coudés et portent, à leur extrémité opposée aux pivots transversaux 170a, 170b, l'articulation 19 de l'élément de toit avant 7a. Ces bras latéraux articulés pourraient être complétés par des moyens de guidage intégrant des glissières (non représenté).

Le capot de coffre 18 sera favorablement mobile sur la caisse de sorte à permettre les mouvements de sortie et d'entrée du toit. Il pourra être articulé à la caisse vers son extrémité arrière basse, en 180, pour s'ouvrir alors par basculement vers l'arrière et se fermer à l'inverse. On pourra aussi prévoir deux éléments de capot, l'un recouvrant l'espace de rangement 13 du toit et s'ouvrant pour permettre le rangement ou la sortie du toit, l'autre recouvrant le coffre arrière 15 et s'ouvrant pour accéder aux bagages ou à un moteur. Pour assurer l'écartement variable précité entre les éléments de toit avant et arrière, leurs moyens d'écartement variable 25 comprennent ici favorablement des moyens d'articulation comprenant essentiellement le système de biellettes précité. Il pourrait s'agir d'autres moyens d'articulation tels que des systèmes à glissières ou des combinaisons biellettes-glissières. Ces moyens d'articulation 25 sont articulés sur les moyens latéraux 17a, 17b, donc sur le châssis intermédiaire 31.

Figures 2 et 3, on voit que ce châssis 31 comprend, outre les deux bras latéraux 17a, 17b, un arbre transversal inférieur 33 s'étendant entre les pivots 170a, 170b et une barre transversale structurelle supérieure 35 reliant également les deux bras, à l'endroit de leur coude 171.

L'arbre 33 sert à transmettre le mouvement depuis l'actionneur en prise sur lui et porté par la caisse jusqu'aux moyens 17a,17b.

L'élément arrière 7b s'étend globalement entre le coude 171 et l'extrémité avant des bras où se trouve donc l'articulation 19. L'élément arrière 7b pourrait s'étendre jusque vers l'arrière des moyens 17a et 17b.

Cet élément 7b est favorablement lié au châssis articulé 31 par l'intermédiaire du cadre support 37, lequel apparaît figure 3 sensiblement horizontal lorsque le toit est fermé. Ce cadre présente alors une forme de U à plat, avec une traverse avant 37a.

De préférence, c'est via le support 37 que l'élément arrière 7b va être monté sur le châssis 31, les moyens d'écartement 25 permettant la mobilité, ici l'articulation avec déplacement d'avant en arrière ou inversement, de cet élément 7b vis-à-vis du châssis.

Figures 1 et 2, les moyens 25 comprennent, pour l'un des côtés latéraux, l'autre étant identique, des biellettes respectivement avant et arrière 39a, 39b articulées sur les moyens latéraux 17a, 17b et sur l'élément arrière 7b via le cadre 37 pour former un quadrilatère déformable.

Figures 2, 3 ou 4, à l'avant, sur chaque biellette avant telle que 39a, est articulée une autre biellette, telle que 41a, de commande en articulation de l'élément 7a. A l'arrière, chaque biellette arrière, telle que 39b, porte, articulée sur elle, une biellette de liaison 43a s'articulant en 430a sur la caisse 3 ou à l'endroit d'un axe fixe par rapport à cette caisse. Fig.4, la biellette 43b est montée comme celle 43a.

Figure 2, on voit précisément ces différentes biellettes et les bras dans différentes positions : toit fermé, position intermédiaire et toit plié rangé en 13.

On constate ainsi qu'entre les positions fermée et rangée, l'élément arrière de toit 7b a pivoté d'environ 180° autour globalement d'un axe transversal à X, de sorte que, rangées dans l'espace 13, les surfaces intérieures 70a, 70b des deux éléments de toit sont disposées face à face. Les courbures de ces deux éléments sont donc alors inverses. Les moyens latéraux d'entraînement du toit 17a, 17b ont de même basculé d'environ 180° autour de l'axe transversal fixe 170c; voir également figures 1 et 4. Fig.1, dans cet état rangé du toit, l'élément avant de toit 7a déborde vers l'arrière par rapport à l'élément arrière 7b, ce qui permet de « glisser » l'élément 7b sous le renfort transversal 47 et la lunette fixe 8a tout en maintenant l'élément 7a au plus près de l'axe 170c, avec un contournement court de 8a et 47 lors des mouvements de toit.

Pour favoriser un mouvement sécurisé du toit, il est conseillé qu'au début du mouvement de rangement de ce toit à partir de son état fermé, outre l'élément avant, l'élément arrière de toit soit déplacé vers le haut et l'arrière (ARR), ceci par rapport à la caisse 3 et/ou à cet élément avant 7a, de préférence par rapport aux deux.

L'agencement décrit ci-avant des moyens d'articulation 25 entre l'élément arrière 7b (ou son cadre support 37) et les moyens 17a, 17b, pour assurer la mobilité du premier sur les seconds, permet, au début de l'ouverture du toit, un déplacement à la fois vers le haut et l'arrière de l'élément arrière 7b, ceci tant par rapport à la caisse qu'à l'élément avant 7a.

Ainsi, au début du mouvement de rétractation conduisant au rangement du toit, l'élément arrière 7b s'écartera de l'élément avant 7a en se soulevant sur le châssis articulé de toit 31 de manière à décoller les différents joints d'étanchéité de l'élément de toit arrière. Ensuite, l'élément arrière se décalera le long de ce châssis, en se rapprochant de l'axe de pivotement 170c, jusqu'à atteindre la position renversée sensiblement à 180°, rangée, que l'élément arrière de toit 7b occupe donc une fois le toit replié dans son espace de rangement arrière 13.

Comme illustré figure 3, un second cadre support peut se retrouver globalement, en 45, en tant que support de l'élément de toit avant 7a. Ici, ce cadre 45 est, à chaque extrémité libre de ses tronçons latéraux, fixé à une patte telle que 47a pour le côté gauche du toit sur la figure 3, cette patte s'articulant en 19 selon l'axe 170d transversal à X, à l'extrémité libre des moyens latéraux d'entraînement, tels que 17a, et donc du châssis 31, à l'opposé de l'axe 170c d'articulation à la caisse. Sur chaque patte, telle que 47a, s'articule également la biellette, telle que 41a, contrôlant le pivotement de l'élément avant de toit 7a au cours du mouvement.

Figure 4, le châssis 31, ici figuré par la partie inférieure arrière de son bras latéral 17b, est latéralement monté sur la caisse 3 par l'intermédiaire d'une structure porteuse 47 qui peut être tubulaire et en forme générale d'arceau dressé, avec des pieds latéraux fixés à la caisse 3, latéralement, comme en 47b.

A l'intérieur d'un tronçon central sensiblement horizontal 47c de cette structure 47, transversale à X, est montée la barre transversale 33 formant arbre de transmission du mouvement, entre le vérin unique central d'actionnement 49 et le toit 7, via donc le châssis 31 dont les pivots 170a, 170b sont en prise avec l'arbre transversal 33. Cet arbre est lui-même en prise avec le moyen d'actionnement 49 via une douille d'entraînement 55 ; fig.4.

Fig.5, la pièce de liaison 57 est fixée latéralement par deux brides portées par les tronçons 47b,47c. Cette pièce peut être un cylindre avec une fente 59 pour engager le pivot concerné, ici 170b.

On voit figures 1 et 2 que, lors du rangement du toit 7, on lui a fait contourner la structure transversale 47 de la caisse. Ainsi, à l'état rangé, une partie 700, correspondant au bord avant dans cette position renversée, de l'élément de toit arrière 7b est située sous cet élément de structure du véhicule, ainsi d'ailleurs que sous la lunette arrière fixe 8a.

Si l'on privilégie les critères de compacité du toit rangé et que le volume de rangement disponible est très faible, alors l'importance d'un toit comme décrit et illustré, avec exclusivement les deux éléments avant et arrière 7a,7b précités, devient décisive. Dans ce cadre, le caractère adjacent, au moins toit fermé, entre l'élément arrière 7b et la lunette arrière 8a qu'il recouvre alors est important, d'autant plus si cette lunette 8a est fixe sur la caisse, comme illustré.

## Revendications

1. Procédé pour fermer un toit (7) de véhicule convertible, ou le ranger dans un espace (13) de rangement situé à l'écart d'un habitacle de ce véhicule, le toit comprenant un élément de toit avant (7a,45) et un élément de toit arrière (7b,37) situé l'un derrière l'autre dans toit fermé au-dessus de l'habitacle (9), le procédé étant tel qu'on range le toit en pliant l'un vers l'autre lesdits éléments avant (7a) et arrière (7b) de toit de telle sorte qu'ils présentent leurs faces intérieures concaves face à face dans un espace de rangement, et, entre les états fermé et rangé du toit, on modifie l'écartement entre lesdits éléments de toit avant et arrière (7a, 7b), en les éloignant l'un de l'autre au rangement du toit, tandis qu'ils se rapprochent jusqu'à venir sensiblement l'un contre l'autre à la fermeture du toit, **caractérisé en ce que**, pendant le rangement du toit (7), on agit sur l'élément de toit arrière (7b) en le faisant se déplacer sur des moyens (17a, 17b) latéraux d'entrainement du toit entre ses états fermé et rangé sur lesquels s'articule l'élément avant de toit, de sorte à réaliser ainsi un déplacement longitudinal (axe X) de l'élément de toit carrière (7b) par rapport à l'élément de toit avant (7a) qui l'écarte longitudinalement de ce dernier, l'élément de toit arrière (7b) se trouvant ainsi, à l'état rangé, décalé longitudinalement en direction de l'avant du véhicule, le long de l'élément de toit avant.

2. Procédé selon la revendication 1, **caractérisé en ce qu'**on réalise le déplacement longitudinal de sorte qu'à l'état rangé l'élément avant de toit (7a) déborde vers l'arrière par rapport à l'élément arrière de toit (7b).

3. Procédé selon la revendication 1, **caractérisé en ce qu'**entre les états fermé et rangé du toit (7), on articule par rapport à la caisse (3) du véhicule l'un au moins desdits éléments de toit (7a, 7b) et on les déplace l'un par rapport à l'autre, par montage articulé de chacun d'eux sur lesdits moyens (17a, 17b) latéraux d'entrainement du toit, pour qu'à l'état rangé l'élément de toit arrière (7b) se trouve déplacé longitudinalement en direction de l'avant du véhicule par rapport à l'élément de toit avant (7a).

4. Procédé selon l'une des revendications précédentes, **caractérisé en ce que**, lors du rangement du toit (7), on lui fait contourner un élément (47) de structure du véhicule s'étendant en travers de la caisse (3) et fixée à elle, de sorte qu'à l'état rangé une partie avant (700) de l'élément de toit arrière (7b) est situé sous ledit élément transversal de structure.

5. Procédé selon la revendication 1, ou cette revendication 1 et l'une des revendications 2,3, **caractérisé en ce qu'**au début du mouvement de rangement du toit à partir de son état fermé, on fait se déplacer vers le haut et/ou l'arrière l'élément de toit arrière (7b) par rapport à la caisse (3) du véhicule et/ou à l'élément avant de toit (7a), en agissant sur lui par l'intermédiaire de moyens (25) d'articulation articulés sur cet élément arrière de toit (7b) et sur des bras (17a, 17b) latéraux d'articulation du toit articulés sur la caisse (3) ou sur une structure porteuse (47) fixée à elle, autour d'un axe (170c) fixe sur ou par rapport à la cette caisse (3).

6. Toit mobile sur un véhicule convertible, le toit comprenant un élément de toit avant (7a), un élément de toit arrière (7b) situé derrière le premier dans un état du toit fermé au-dessus de l'habitacle du véhicule, et des moyens (17a,17b,31,33,49) permettant de ranger le toit derrière l'habitacle en pliant l'un vers l'autre lesdits éléments avant (7a) et arrière (7b) de toit, de telle sorte qu'ils présentent leurs faces intérieures concaves face à face dans un espace de rangement (13), le toit comprenant en outre des moyens (25) d'écartement variable entre lesdits éléments de toit (7a, 7b) avant et arrière, pour que, dans l'état rangé du toit, l'élément de toit arrière (7b) soit décalé longitudinalement en direction de l'avant du véhicule par rapport à l'élément de toit avant (7a) **caractérisé en ce que** les dits moyens permettant de ranger le toit (7) comprennent des moyens latéraux (17a,17b) d'entraînement du toit entre ses états fermé et rangé sur lesquels s'articule l'élément avant de toit (7a) et sur lesquels l'élément arrière (7b) est déplaçable, de sorte que pendant le rangement du toit, en agissant sur l'élément de toit arrière (7b), on réaliser un déplacement longitudinal (axe X) de l'élément de toit arrière (7b) par rapport à l'élément de toit avant (7a) qui s'écarte longitudinalement de ce dernier, l'élément de toit arrière (7b) se trouvant ainsi, à l'état rangé, décalé longitudinalement en direction de l'avant du véhicule, le long de l'élément de toit avant (7a).

7. Toit selon la revendication 6, **caractérisé en ce que** les moyens (25) d'écartement variable comprennent des moyens intermédiaires (25, 39a, 39b) montés mobiles sur un châssis (31) intermédiaire, pour rendre l'élément arrière de toit (7b) mobile sur ce châssis (31), et les moyens pour ranger le toit comprennent des moyens latéraux (17a, 17b) d'entrainement du toit entre ses états fermé et rangé et sur lesquels est monté articulé l'élément de toit avant (7a).

8. Toit selon la revendication 7, **caractérisé en ce que** les moyens latéraux d'entraînement du toit (7) comprennent des bras latéraux (17a, 17b) articulés sur la caisse (3) par l'intermédiaire d'une structure porteuse (47) s'étendant en travers de la caisse (3) et fixée à elle.

9. Toit mobile selon la revendication 7 ou 8, **caractérisé en ce que** l'élément de toit arrière (7b) est lié au châssis (31) par l'intermédiaire d'un cadre support (37) comprenant une traverse (37a) et auquel sont liés lesdits moyens intermédiaires (25, 39a, 39b) adaptés à rendre l'élément arrière de toit (7b) mobile sur le châssis.

10. Toit mobile selon la revendication 7 ou cette revendication 7 et l'une des revendications 7 à 9, **caractérisé en ce que** lesdits moyens intermédiaires (25, 39a, 39b) comprennent des moyens d'articulation, tels que des biellettes (39a, 39b), pour articuler l'élément de toit arrière (7b) sur le châssis (31). 10.

11. Toit mobile selon la revendication 10, **caractérisé en ce que** sur l'un desdits moyens d'articulation (39a, 39b) est montée articulée une biellette (41a) articulée par ailleurs sur l'élément avant de toit (7a) pour une commande en articulation de ce dernier.

12. Toit mobile selon l'une des revendications 6 à 11, **caractérisé en ce que** :
- pour recouvrir entièrement l'habitacle dans l'état fermé du toit, le toit comprend exclusivement lesdits éléments de toit avant (7a,45) et arrière (7b,37), tous deux rigides,
- et, rangé, ce toit est plié sensiblement à plat, avec les faces intérieures concaves desdits éléments de toit (7a, 7b) globalement à plat dans l'espace de rangement (13).

13. Véhicule comprenant le toit selon l'une des revendications 6 à 12 et sur lesquels est mis en oeuvre le procédé selon l'une des revendications 1 à 5.

14. Véhicule selon n la revendication 13, **caractérisé en ce que** :
- il comprend une lunette arrière (8a) fixe sur la caisse (3), et
- l'élément de toit arrière (7b) est adjacent à cette lunette (8a) à l'état fermé du toit et est localement situé dessous à l'état rangé du toit.

## Claims

1. Process for closing a roof (7) of a convertible vehicle, or for storing it in a storage space (13) located away from the interior of said vehicle, the roof comprising a forward roof clement (7a, 45) and a rear roof element (7b, 37) located one behind the other in a closed roof state above the interior (9), the procedure being such that the roof is stored by folding said forward (7a) and rear (7b) elements one against the other such that their concave interiors face one another in a storage space and, between the closed and stored states of the roof, the distance between said forward and rear roof elements (7a, 7b) is modified by moving them apart from one another in storing the roof, while they come close enough to be essentially one against the other when the roof is closed, **characterised in that**, during storage of the roof (7), the rear roof element (7b) is made to move on lateral driving means (17a, 17b) of the roof between its closed and stored states on which the forward element of the roof is articulated, in order thus to form a longitudinal movement (X axis) of the rear roof element (7b) relative to the forward roof element (7a), which moves it longitudinally away from the latter, the rear roof element (7b) thereby being located, in the stored state, set back longitudinally towards the front of the vehicle, along the length of the forward roof element.

2. Procedure according to claim 1, **characterised in that** the longitudinal movement is achieved such that in the stored state the forward roof element (7a) extends towards the rear relative to the rear roof element (7b).

3. Procedure according to claim 1, **characterised in that** between the closed and stored states of the roof (7), at least one of said roof elements (7a, 7b) is articulated relative to the body (3) of the vehicle, and they are moved one relative to the other by means of articulated mounting of each of them on said lateral roof driving means (17a, 17b), such that in the stored state the rear roof element (7b) is moved longitudinally towards the front of the vehicle relative to the forward roof element (7a).

4. Process according to one of the preceding claims, **characterised in that**, during storage of the roof (7), an element (47) of the vehicle structure is caused to go around it, extending across the body (3) and affixed thereto, such that in the stored state a forward part (700) of the rear roof element (7b) is situated below said transverse structural element.

5. Procedure according to claim 1, or said claim 1 and one of claims 2, 3, **characterised in that** at the beginning of the storage movement of the roof from its closed state, the rear roof element (7b) is caused to move upward and/or backwards relative to the body (3) of the vehicle and/or to the forward roof element (7a), acting on it by the intermediary of articulating means (25) articulated on this rear roof element (7b) and on the lateral articulation arms (17a, 17b) of the roof articulated on the body (3) or on a bearing structure (47) affixed thereto, around an axis (170c) fixed on or relative to said body (3).

6. Mobile roof on a convertible vehicle, the roof comprising a forward roof element (7a), a rear roof element (7b) located behind the first in a closed roof state above the interior of the vehicle, and means (17a, 17b, 31, 33, 49) enabling the storage of the roof behind the interior by folding one of said forward (7a) and rear (7b) roof elements against each other, such that their concave interiors face one another in a storage space (13), the roof additionally comprising variable spacing means (25) between said forward and rear roof elements (7a, 7b), in order that, in the stored roof state, the rear roof element (7b) is displaced longitudinally towards the front of the vehicle relative to the forward roof element (7a), **characterised in that** said means making it possible to store the roof (7) comprise lateral means (17a, 17b) for driving the roof between its closed and stored states, on which is articulated the forward roof element (7a) and on which the rear roof element (7b) is movable, such that during storage of the roof, acting on the rear roof element (7b), a longitudinal movement (X axis) of the rear roof element (7b) is achieved relative to the forward roof element (7a), which moves longitudinally away from the former, the rear roof element (7b) thus being located, in the stored state, displaced longitudinally towards the front of the vehicle, along the length of the forward roof element (7a).

7. Roof according to claim 6, **characterised in that** the variable separation means (25) comprise intermediary means (25, 39a, 39b) mounted in a mobile fashion on an intermediary chassis (31), in order to render the rear roof element (7b) mobile on this chassis (31), and the means for storing the roof comprise lateral means (17a, 17b) for driving the roof between its closed and stored states and on which the forward roof element (7a) is mounted in an articulated manner.

8. Roof according to claim 7, **characterised in that** the lateral driving means of the roof (7) comprise lateral arms (17a, 17b) articulated on the body (3) by means of a bearing structure (47), extending across the body (3) and affixed thereto.

9. Mobile roof according to claim 7 or 8, **characterised in that** the rear roof element (7b) is connected to the chassis (31) by means of a supporting frame (37) comprising a crosspiece (37a) and to which are connected said intermediary means (25, 39a, 39b), which are suitable for making the rear roof element (7b) mobile on the chassis.

10. Mobile roof according to claim 7 or to said claim 7 and one of claims 7 to 9, **characterised in that** said intermediary means (25, 39a, 39b) comprise articulating means, such as connecting rods (39a, 39b), in order to articulate the rear roof element (7b) on the chassis (31).

11. Mobile roof according to claim 10, **characterised in that** on one of said articulation means (39a, 39b) a connecting rod (41a) is mounted, additionally articulated to the forward roof element (7a) for the articulation control of the latter.

12. Mobile roof according to one of claims 6 to 11, **characterised in that**:
- in order to fully cover the interior in the closed roof state, the roof comprises exclusively said forward (7a, 45) and rear (7b, 37) roof elements, both rigid,
- and, when stored, this roof is folded essentially flat, with the concave interiors of said roof elements (7a, 7b) essentially flat in the storage space (13).

13. Vehicle comprising the roof according to one of claims 6 to 12 and on which is implemented the procedure according to one of claims 1 to 5.

14. Vehicle according to claim 13, **characterised in that**:
- it comprises a rear window (8a) affixed to the body (3), and
- the rear roof element (7b) is adjacent to said rear window (8a) in the closed state of the roof and is locally situated below it in the stored state of the roof.

## Patentansprüche

1. Verfahren zum Schließen eines Daches (7) eines Cabriolets, in welchem jenes in einem Stauraum (13) angeordnet ist, der in einem Abstand von einer Fahrgastzelle des Fahrzeugs liegt, wobei das Dach ein vorderes Dachelement (7a, 45) und ein hinteres Dachelement (7b, 37) umfasst, die in einem geschlossenen Zustand des Daches über der Fahrgastzelle (9) hintereinander angeordnet sind, wobei das Verfahren derart ist, dass das Dach durch ein Zueinanderklappen des vorderen (7a) und des hinteren Elements (7b) des Daches angeordnet wird, derart, dass diese in einem Stauraum mit ihren konkaven Innenflächen einander zugewandt sind, und zwischen dem geschlossenen und verstauten Zustand des Daches der Abstand zwischen dem vorderen und hinteren Dachelement (7a, 7b) modifiziert wird, indem diese beim Verstauen des Daches voneinander wegrücken und sich beim Verschließen des Daches soweit annähern, bis sie im Wesentlichen aneinander anliegen, **dadurch gekennzeichnet, dass** während des Verstauens des Daches (7) auf das hintere Dachelement (7b) eingewirkt wird, so dass sich dieses auf seitlichen Antriebsmitteln (17a, 17b) des Daches, zwischen seinem geschlossenen und verstauten Zustand verschieben lässt, auf welchen das vordere Dachelement angelenkt ist, derart, dass auf diese Weise eine Längsverschiebung (Achse X) des hinteren Dachelements (7b) in Bezug zu dem vorderen Dachelement (7a) herbeigeführt wird, was dieses in Längsrichtung vom Letzteren in Abstand bringt, wobei das hintere Dachelement (7b) somit im verstautem Zustand in Richtung der Vorderseite des Fahrzeugs, entlang des vorderen Dachelements längs verschoben ist.

2. Verfahren nach Anspruch 1, **dadurch gekennzeichnet, dass** die Längsverschiebung derart durchgeführt wird, dass im verstauten Zustand das vordere Dachelement (7a) in Richtung der Heckseite in Bezug zu dem hinteren Dachelement (7b) vorsteht.

3. Verfahren nach Anspruch 1, **dadurch gekennzeichnet, dass** zwischen dem geschlossenen Zustand und dem verstauten Zustand des Daches (7) in Bezug zu der Karosse (3) des Fahrzeugs wenigstens eines der Dachelemente (7a, 7b) angelenkt wird und durch eine gelenkige Montage jedes derselben auf den seitlichen Antriebsmitteln (17a, 17b) des Daches in Bezug zueinander verlagert werden, so dass dieses im verstauten Zustand des hinteren Dachelements (7b) längs in Richtung der Vorderseite des Fahrzeugs in Bezug zu dem vorderen Dachelement (7a) verlagert ist.

4. Verfahren nach einem der vorhergehenden Ansprüche, **dadurch gekennzeichnet, dass**, beim Verstauen des Daches (7), ein Element (47) des Fahrzeugrahmens verdreht wird, das sich quer zu der Karosserie (3) erstreckt und an dieser befestigt ist, derart, dass im verstauten Zustand ein vorderer Bereich (700) des hinteren Dachelements (7b) unter dem Rahmen-Querelement liegt.

5. Verfahren nach Anspruch 1 oder diesem Anspruch 1 und einem der Ansprüche 2, 3, **dadurch gekennzeichnet, dass** am Anfang der Verstaubewegung des Daches, ausgehend von seinem geschlossenen Zustand, das hintere Dachelement (7b) in Bezug zu der Karosserie (3) des Fahrzeugs und/oder zu dem vorderen Dachelement (7a) nach oben und/oder nach hinten verschoben wird, indem auf dieses mithilfe der Gelenkmittel (25) eingewirkt wird, die angelenkt sind an diesem hinteren Dachelement (7b) und an seitlichen Gelenkarmen (17a, 17b) des Daches, die an der Karosserie (3) oder an einer an dieser befestigten Trägerstruktur (47) um eine Achse (170c) angelenkt sind, die an oder in Bezug auf diese Karosserie (3) fixiert ist.

6. Bewegliches Dach auf einem Cabriolet, wobei das Dach aufweist ein vorderes Dachelement (7a), ein hinteres Dachelement (7b), das in einem geschlossenen Dachzustand über der Fahrgastzelle des Fahrzeugs hinter dem ersten angeordnet ist, und Mitteln (17a, 17b, 31, 33, 49), welche das Verstauen des Daches hinter der Fahrgastzelle erlauben, indem das vordere (7a) und hintere (7b) Dachelement zueinander hin geklappt werden, derart, dass sie mit ihren konkaven Innenflächen in einem Stauraum (13) einander zugewandt sind, wobei das Dach aufweist ferner Mittel (25) zur variablen Entfernung zwischen dem vorderen und hinteren Dachelement (7a, 7b), damit das hintere Dachelement (7b) im verstauten Zustand des Daches längs in Richtung der Vorderseite des Fahrzeugs in Bezug zu dem vorderen Dachelement (7a) verschoben ist, **dadurch gekennzeichnet, dass** die Mittel erlauben, das Dach (7) mit seitlichen Antriebsmitteln (17a, 17b) des Daches zwischen seinem geschlossen und verstauten Zustand anzuordnen, an welchen das vordere Dachelement (7a) angelenkt ist und an welchen das hintere Element (7b) verschiebbar ist, derart, dass während der Anordnung des Daches, indem auf das hintere Dachelement (7b) eingewirkt wird, eine Längsverschiebung (Achse X) des hinteren Dachelements (7b) in Bezug zu dem vorderen Dachelement (7a) herbeigeführt wird, welches sich längs von diesem entfernt, wobei das hintere Dachelement (7b) dann im verstauten Zustand längs in Richtung der Vorderseite des Fahrzeugs, entlang des vorderen Dachelements (7a) verschoben ist.

7. Dach nach Anspruch 6, **dadurch gekennzeichnet, dass** die variablen Entfernungsmittel (25) aufweisen Zwischenelemente (25, 39a, 39b), die beweglich auf einem Zwischengehäuse (31) montiert sind, um das hintere Dachelement (7b) auf diesem Gehäuse (31) beweglich zu machen, und die Mittel zum Anordnen des Daches aufweisen seitliche Antriebsmittel (17a, 17b) des Daches zwischen seinem geschlossenen und verstauten Zustand und auf welchen das vordere Dachelement (7a) gelenkig montiert ist.

8. Dach nach Anspruch 7, **dadurch gekennzeichnet, dass** die seitlichen Antriebmittel des Daches (7) aufweisen seitliche Arme (17a, 17b), die an der Karosserie (3) angelenkt sind, mithilfe einer Trägerstruktur (47), die sich quer zu der Karosserie (3) erstreckt und an dieser fixiert ist.

9. Bewegliches Dach nach Anspruch 7 oder 8, **dadurch gekennzeichnet, dass** das hintere Dachelement (7b) mit dem Chassis (31) mithilfe eines Trägerrahmens (37) verbunden ist, der eine Traverse (37a) aufweist, und mit welchem Zwischenelemente (25, 39a, 39b) verbunden sind, die das hintere Dachelement (7b) an dem Chassis beweglich machen.

10. Bewegliches Dach nach Anspruch 7 oder diesem Anspruch 7 und einem der Ansprüche 7 bis 9, **dadurch gekennzeichnet, dass** die Zwischenelemente (25, 39a, 39b) aufweisen Gelenkmittel, wie Schwingarme (39a, 39b), um das hintere Dachelement (7b) an dem Chassis (31) anzulenken.

11. Bewegliches Dach nach Anspruch 10, **dadurch gekennzeichnet, dass** auf einem der Gelenkmittel (39a, 39b) ein Schwingarm (41a) gelenkig montiert ist, der im Übrigen an dem vorderen Dachelement für eine gelenkige Ausübung desselben angelenkt ist.

12. Bewegliches Dach nach einem der Ansprüche 6 bis 11, **dadurch gekennzeichnet, dass**:
- um die Fahrgastzelle in dem geschlossenen Zustand des Daches vollständig abzudecken, das Dach ausschließlich das vordere (7a, 45) und hintere (7b, 37) Dachelement umfasst, beide steif,
- und, verstaut, dieses Dach im Wesentlichen flach zusammengeklappt ist, mit den konkaven Innenflächen der Dachelemente (7a, 7b) im Großen und Ganzen flach in dem Stauraum (13).

13. Fahrzeug mit dem Dach nach einem der Ansprüche 6 bis 12 und an welchem das Verfahren nach einem der Ansprüche 1 bis 5 durchgeführt wird.

14. Fahrzeug nach Anspruch 13, **dadurch gekennzeichnet, dass**:
- dieses ein Heckfenster (8a) umfasst, dass an der Karosserie (3) fixiert ist, und
- das hintere Dachelement (7b) an dieses Fenster (8a) in geschlossenem Zustand des Daches angrenzt und im verstauten Zustand des Daches örtlich darunter angeordnet ist.
